# EUROPEAN PATENT APPLICATION

(11) **EP 1 986 303 A1**
(43) Date of publication of application: **29.10.2008**
(21) Application number: 07300985.4
(22) Date of filing: 25.04.2007
(51) Int. Cl.: H02J 3/00

(54) **Peer-to-peer transaction-based power supply methods and systems**

(71) Applicant: Sony France S.A., 92110 Clichy La Garenne (FR)
(72) Inventor: Steels, Luc c/o Sony Computer Science Laboratory, 75005 Paris (FR); Hanappe, Peter c/o Sony Computer Science Laboratory, 75005 Paris (FR)
(74) Representative: Thévenet, Jean-Bruno

(57) **Abstract**

A peer-to-peer approach is used for the transfer of electrical power between devices (10,30). A communications link (24) is used for negotiation of the details of a desired power-supply transaction between a power-supplying device and a power-receiving device and, when the transaction details are settled, a power supply link (23) is used for implementing the agreed transfer of power.

## Description

The present invention relates to the field of electrical-power distribution and, in particular, concerns methods and systems in which the management of power distribution is decentralized.

Traditionally, the distribution of electrical power is managed in a highly-centralized fashion. Typically, a power supply company runs a group of power stations and supplies electrical power from the power stations to consumers via a network of sub-stations and cables. The power supply company determines which of the power stations supplies power to different groups of consumers (sometimes in a dynamic manner), dependent on factors including geographical location and expected demand. In some circumstances, the power supply company may decide, unilaterally, to reduce or temporarily discontinue the supply of power to a given consumer or group of consumers.

The consumer enters into a contract with the power supply company so that, in the future, he can draw electrical power from the power-distribution network at will. The supplied power will be power of a particular specification in terms of voltage level, frequency, maximum current, etc. The consumer has no control over the particular power station that is the source of the electrical energy that is physically supplied to his premises (home, factory, etc.), nor can he readily vary the specification of the power he receives.

There is a growing need for more efficient and locally-distributed management of energy distribution, even at the level of a single building. There is also a need to integrate many different sources of power, including renewable energy sources. For example, consider the case of a house-holder who needs a small quantity of electrical power. Perhaps he has a neighbour with photovoltaic cells on the roof of his house, or a wind turbine, producing energy in excess of the neighbour's need. It would be more efficient for this householder to be able to use his neighbour's excess pawer - produced locally - rather than to make use of power produced remotely by a utility company and distributed over a power-supply network with concomitant losses.

Proposals already exist for so-called microgrids, where small local networks are formed integrating distributed power producers and local power consumers.

The present inventors have conceived a new approach to power distribution, based on peer-to-peer negotiation of power-supply transactions, and establishment of point-to-point supply of electrical power, between a supply-side device and a reception-side device. A device may be able to act as a supply-side device even if it has no inherent power-generation capacity, for example if it has some means of storing electrical energy. A reception-side device may itself consume electrical power or it may receive power merely to store it in a storage device (or to pass it on). The same device may be able to act as a supply-side device or a reception-side device, depending on its needs at a given time.

This new approach to power-distribution could be likened to the type of peer-to-peer information exchange that takes place over the Internet. According to the invention, instead of entering into an open-ended contract for supply of power from a single supplier, a power-receiving device will typically negotiate individual contracts for different power-supply transactions and those transactions may involve a variety of different supply-side devices.

According to the present invention, power supply links become associated with communications links. When a consumer requires electrical power he uses a communications link in order to negotiate, in an automatic or semi-automatic manner, with one or more other devices that could provide him with power of his desired specification. Typically, the negotiation phase will involve reaching agreement on issues such as the scheduling of the transfer of electrical power, as well as the sourcing of the electrical power to be supplied, the price, and details of the specification of the supplied power (in terms of one or more of the following parameters: alternating current or direct current, voltage level, maximum current, total power to be supplied, frequency, and other associated parameters). When the details of the power-supply transaction have been settled, electrical power having the agreed characteristics is supplied to the power-receiving device from the agreed source via the power supply link at the scheduled time and for the agreed price.

The present invention provides a method of distributing electrical power as specified in the appended claims.

The present invention further provides an electrical-power distribution system as specified in the appended claims.

The present invention still further provides an electrical-power provider device as specified in the appended claims.

The present invention yet further provides an electrical-power receiver device as specified in the appended claims.

The present invention still further provides an electrical-power broker device as specified in the appended claims.

The present invention yet further provides an electrical-power transfer link as specified in the appended claims.

This new approach to management of power distribution provided by the present invention can be implemented in an extremely wide variety of ways and can be applied in various different contexts. In particular, the peer-to-peer nature of the power-supply transaction makes this approach highly flexible in terms of the nature and location of the devices supplying and receiving the transferred power. There is a corresponding flexibility in the nature of the links that can be used for the transfer of the supplied power and in the nature of the communications link used in negotiating the power-supply transactions.

A power-receiver device used in the present invention can be substantially any kind of device which consumes and/or stores electrical energy (e.g. domestic appliances including televisions, DVD players, washing machines, microwave ovens, etc.; lighting circuits; heating circuits; industrial machinery; and others). The power-receiving device may be installed in a fixed location but this is not essential; the invention can be used for supplying power to and/or from portable devices, for example: mobile telephones, MP3 players, laptop computers, personal digital assistants, etc.

A power-supplying device used in the present invention can be substantially any kind of device that is capable of delivering electrical energy. The power-supplying device may be a device which generates electrical energy (for example, a set of photovoltaic cells, a wind turbine, a fuel cell, a conventional power station, etc.). Alternatively, or additionally, it may be a device which comprises some means for storing electrical energy (for example, in a battery, flywheel, etc) and can output electrical energy from storage.

As indicated above, a single device may be capable of operating both as a power-receiving device and as a power-supplying device according to the present invention, depending upon its own requirements in terms of electrical energy at any given time.

A power supply link according to the invention may consist of, or include, conventional wiring such as the existing electrical wiring within a home; it may include a connection to a conventional large-scale power-supply grid or micro-grid. Alternatively, the power-supply link may consist of a dedicated cable arranged to interconnect the parties to a given power-transfer transaction. For a given power-transfer transaction according to the invention, a combination of different types of wiring/cables/networks may be used in order to transfer the agreed power from a power-supplier device to a power-receiver device.

Likewise, a communication link used in the present invention can take various forms. It may be integrated with the power-supply link into a common cable/set of cables, typically by providing separate wires, or pairs of wires, within the cable for the power-supply and communications links, respectively. Alternatively, the transfer of power and the communications messages may pass over the same wires. Still further, the communications link may be physically separate from the power-supply link, for example, making use of wires in a separate cable, making use of a wireless communications method, etc. The communications link may make use of pre-existing communications networks, for example, telecommunications networks, computer networks (LANs, WANs, intranets, the Internet, etc.) and others, in order to communicate information between the power-supplier device and the power-receiver device.

As with conventional power-distribution networks, power supply systems according to the invention are robust and scalable. However, in addition, they integrate intelligence for the negotiation of power-supply transactions. In many applications of the present invention, this negotiation will be a direct negotiation between the ultimate supplier and receiver of the electrical power involved in the transaction. However, in some applications, an additional device may act as a broker or overseer of the negotiation and conclusion of the power-supply transaction may be made conditional on some action to be taken, or signal to be generated, by this additional device.

By adopting a peer-to-peer approach to the supply of electrical power, the present invention provides local management of power distribution, facilitating the exchange of energy between heterogeneous electrical and electronic devices using connections which may be established ad hoc. This gives the consumer much greater flexibility in terms of the source and/or pricing of the electrical power he receives. This approach facilitates the addition of energy producers to the power-supply network with a minimum of administrative and technical overhead.

In addition, use of the present invention can also lead to gains in efficiency. For example, a device may require electrical power at a particular voltage level that is different from the usual voltage obtainable from "the mains" (i.e. the national power-distribution grid). Perhaps this device may be able to negotiate a power-supply transaction with a power-supply device that generates energy which is already at the required particular voltage level. As another example, the present invention allows energy suppliers and energy-receivers to negotiate pricing in real-time and to predict the most efficient energy usage on a local level.

The above and other features and advantages of the present invention will become clearer from the following description of various embodiments of the invention, given by way of example and not limitation, in association with the annexed drawings, in which:
Fig.1 shows diagrams indicating exchanges of messages during negotiations in one example of a method according to the invention, in which:
Fig.1A illustrates the case where negotiations are successful, leading to performance of an electrical-energy transfer, and
Fig.1B illustrates the case where negotiations are unsuccessful;
Fig.2 is a diagram indicating messages that are transmitted for billing purposes in one example of a method embodying the present invention;
Fig.3 is a diagram indicating the general structure of one example of a power-distribution system according to a first embodiment of the invention; and
Fig.4 illustrates a power-distribution system according to a second embodiment of the invention.

The invention provides methods, systems and devices implementing the above-mentioned new approach to management of power-distribution.

### Power-Distributian Methods

A power-distribution method according to the present invention involves the implementation of functions by at least two devices in order to negotiate and perform an electrical-energy transfer from one of the devices (acting as a power-supplier in this transaction) to the other (acting as a power receiver in this transaction), with the electrical energy being transferred over a power link.

The negotiation phase involves the communication of information between the power-supplier device and the power-receiver device via a communications link (which may, or may not be integrated with the power link into a common cable). In the negotiation, the power-receiver device and power-supplier device will usually need to agree the details of the transaction in terms of the quantity of energy to be supplied (e.g. by specifying the start time and duration of the energy-transfer, by specifying the total power (watt-hours, kilowatt-hours) required, etc.), as well as the electrical characteristics of the transfer (e.g. by specifying the voltage level, ac or dc, the maximum current, etc), and the price. The transaction will only take place if agreement is reached during the negotiation phase.

The power-distribution method can be considered to be made up of a series of stages:
- triggering of the negotiation,
- negotiation,
- electrical-energy transfer, and
- payment (although the method may accommodate energy transfers made free of charge).

Negotiation can be triggered in a number of ways, some involving action by the device which is to be the power-receiver, others involving action by the device which is to be the power-supplier in the subsequent transaction. Two common triggers are described below - the first involving emission of a request for energy by a device which will be an energy-receiver in a subsequent transaction, and the second involving emission of an offer of energy by a device which will be an energy-supplier in a subsequent transaction - although others will readily occur to the skilled person depending on the application.

Often an electrical or electronic device will begin to run low on power such that it becomes advisable or imperative for the device to obtain electrical energy so that the device's current needs (or predicted needs/commitments) in terms of electrical energy can be met. This need/desire for energy can be detected automatically using conventional means (for example, the battery-low detector in a mobile telephone, a monitoring module measuring and/or predicting the device's energy usage, etc.) or using circuitry/software dedicated to implementing functions of the present invention. Whatever means are used for determining that a need or desire for energy exists, it is helpful for them to be arranged so as to automatically trigger the start of a negotiation of a peer-to-peer power-supply transaction according to the invention - for example, by outputting an "energy-needed" signal to a control unit which is adapted to handle negotiation of transactions according to the invention. This control unit can form part of the device which is experiencing the need for electrical energy and/or can be provided in an associated module (which can, for example, forming part of a cable serving as the communications and/or power link through which the device will receive energy in the subsequent transaction, or forming part of an interface between the device and such a link).

Sometimes a device which generates or stores electrical energy may have at its disposal more energy than it needs (and/or predicts that it will need) in order to fulfil its commitments. This device may, therefore, trigger negotiation of a power-transfer transaction according to the present invention, in order to make profitable use of its "excess" energy. The existence of this "excess energy" can de detected automatically using known means (for example, a monitoring module measuring and/or predicting the device's energy production, etc.) or using circuitry/software dedicated to implementing functions of the present invention. Whatever means are used for determining that the device has "excess energy", it is helpful for them to be arranged so as to automatically trigger the start of a negotiation of a peer-to-peer power-supply transaction according to the invention - for example, by outputting an "excess-energy-available" signal to a control unit which is adapted to handle negotiation of transactions according to the invention. This control device can form part of the device which has the excess electrical energy and/or can be provided in an associated module (which can, once again, form part of a cable serving as the communications and/or power link through which the device will supply energy in the subsequent transaction, form part of an interface, etc.).

A negotiation may be triggered manually, for example when a user sees a "low-battery" indication on one of his electrical/electronic devices, when a user knows that he will not need energy generated or stored in one of his electrical/electronic devices, etc.

In certain implementations, the negotiation process may take a somewhat different form depending on whether the negotiation has been triggered on the side of a potential energy-receiver or on the side of a potential energy-supplier. However, in preferred embodiments of the method according to the invention, the negotiation process takes substantially the same form regardless of whether the "requesting device" which begins negotiations is a potential power-receiver device or a potential power-supplier device in the forthcoming transaction.

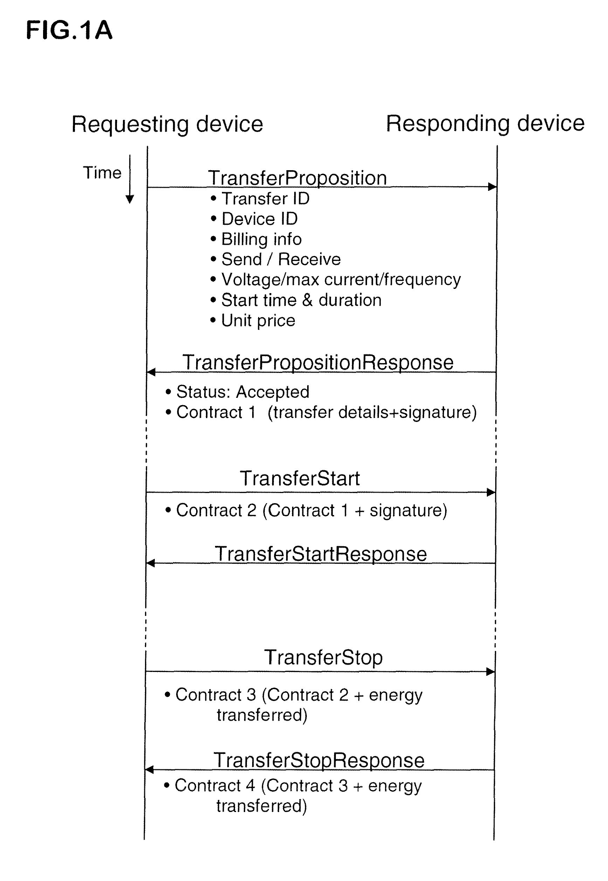

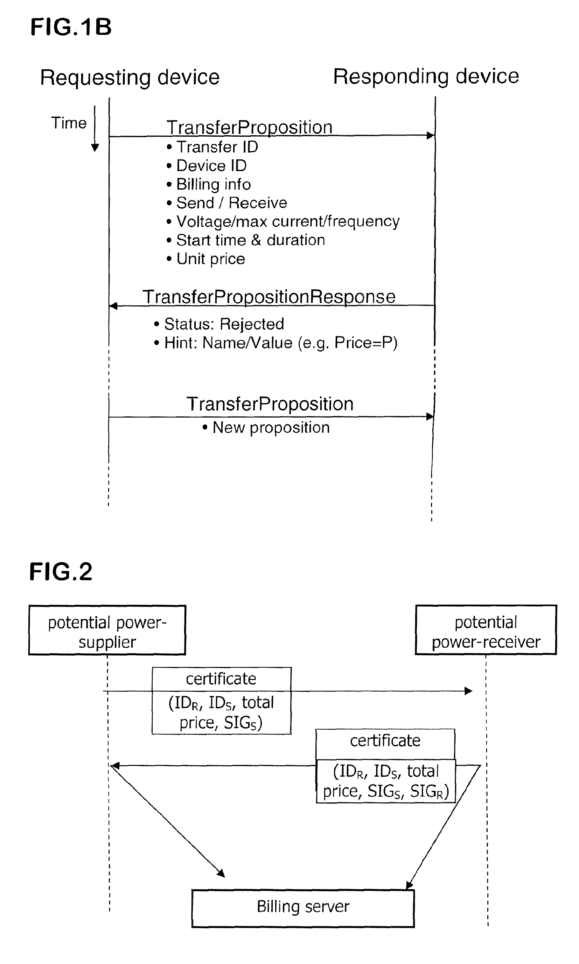

Figs.1A and 1B are diagrams indicating one example of messages that may be exchanged in a successful negotiation, and in an unsuccessful negotiation, respectively. In both cases the negotiation seeks to establish details of a potential energy-transfer transaction, including some or all of the following:
a) the identity of the power-receiver device and power-supplier device;
b) the billing information (the billing service and account of the device);
c) the electrical characteristics of the transfer, for example: the voltage type (ac or dc), the voltage level, the maximum current level, the frequency, etc.;
d) the start time of the energy transfer and the maximum duration;
e) the maximum amount of energy to be transferred, if it is less than the maximum that can be deduced from the duration of the transfer and the electrical characteristics (for example, for DC, given a voltage V and a maximum current Im, the maximum amount of energy that can be transferred in an interval T equals V.Im.T) ; and
f) the price (e.g. unit price, total price, no-cost, etc.).

The skilled person will readily understand that the precise content and number of messages included in the negotiation process need not conform to the examples illustrated in Figs.1A and 1B.

For example, it is possible to envisage cases where the identity of the power-receiver device and/or power-supplier device is never explicitly made known to the other, notably in a case where no charge is being made for the transferred energy and where there is a one-to-one relationship between devices connected by the power-link. However, in many cases it is important for each of the devices involved in negotiating a transaction to know the identity of the other device for security reasons (e.g. in order to prevent energy theft by unscrupulous parties).

It is possible to envisage applications where the electrical characteristics of the transfer are known a priori and so do not need to be explicitly agreed during the negotiation. This could arise, for example, because the power link will only support transfers of energy having a single set of electrical characteristics, because this particular potential energy-receiver can only receive energy having a single set of electrical characteristics and this is already known to the potential power-supplier, because this particular potential power-supplier can only receive energy having a single set of electrical characteristics and this is already known to the potential power-receiver.

In some applications, the negotiation may be for an open-ended supply of electrical power, i.e. where the total quantity of transferred power is only known after the transfer has been completed.

In some cases, the negotiation will not involve exchange of data specifying the desired or offered start time for the energy transfer. This can arise, for example, in an application where it is known a priori that all transfers should take place as soon as negotiation is completed (or it is known that, when the potential power-receiver does not specify a desired start time, the transfer should be performed as soon as negotiation is completed).

Usually, pricing data will be included in the data communicated over the communications link during the negotiation. However, this may not always be the case. In some applications - for example, in a case where the energy transfers are made between devices belonging to the same person - all energy-transfers may be free-of-charge. In some other applications it may be known a priori that all transfers will be free-of-charge if they involve a particular power-receiver, or a particular power-supplier, or a particular power-link (or it may be known that, when the potential power-receiver does not specify an acceptable price and/or the potential power-supplied does not specify a desired price, then the transfer should be performed free-of-charge).

As indicated in Figs.1A and 1B it is not necessary for both devices involved in a negotiation to transmit a full set of data (price, electrical specification, etc.) to the other device. Referring to Fig.1A, if a responding device can participate in an energy transfer having the electrical characteristics (spec) indicated in a message emitted by a requesting device, at the desired time, involving the specified amount of energy and price, then this responding device need only indicate its agreement to participate in the transfer.

Depending on the application, there may be some scope for the power-receiver device to vary its requirements, for example, in the case where the power-receiver is capable of receiving electrical energy of a plurality of different specifications, in the case where the timing of the energy transfer is non-critical, in the case where the power-receiver device could tolerate a slightly higher-than-optimal price, etc. Similarly, there may be some scope for the power-supplier device to vary its offer. In such cases, the negotiation process can involve the exchange of sequences of messages, in which the successive messages transmitted by the potential power-receiver and power-supplier are varied in an attempt to find agreement.

In some power-distribution systems according to the present invention, a one-to-one link is formed between a potential power-receiver and a potential power-supplier such that there is no need to take special measures in order to ensure that messages are corrected addressed. However, other systems according to the invention allow a single potential power-receiver (or power-supplier) to transmit messages to a plurality of potential partners to an energy-transfer transaction. In such systems, the party wishing to start a negotiation may address a message to a specific one of the other devices, or may transmit its messages to plural devices, continuing negotiations only with the device (or those devices) which are capable of participating in the desired transfer. Eventually, if multiple devices can satisfy the request/offer of the device initiating the negotiation, a choice must be made as to which of the multiple devices shall participate in the transaction. Typically, this choice will be made by the device initiating the negotiation. However, the selection could be made by a third party device based on issues such as efficiency.

The present invention does not require any particular format or communications protocol to be used for the negotiation phase in the methods according to the invention; the format and protocol can be adapted to the desired application.

The communications links and power-transfer links used in the energy-transfer transactions according to the present invention may be integrated into a common cable or the like. Alternatively, it may be preferred for the communications link to be separate from the power-transfer link.

If a negotiation is successful, and a potential power-receiver device and potential power-supplier device can agree the details of a power-transfer transaction, then the agreed transfer is implemented at the agreed time. In the example illustrated in Fig.1A, when agreement has been reached the responding device returns a contract that contains the details of the proposed transfer and a signature. The final price is not yet mentioned in the contract. At each stage of the subsequent energy transfer, the state of the transfer is marked in the contract, possible details that are missing are filled in, and a signature is added to validate the changes.

According to the example illustrated in Fig.1A, the requesting device starts the transfer at the agreed time, and returns a signed copy of the contract. When the transfer is completed, the requesting device sends a 'stop' message that includes a new version of the contract including the total amount of energy received or sent by the requesting device. The responding device inserts its value of the amount of energy sent or received. This final contract can be transmitted to a billing service to complete the financial transfer.

If a proposition made by the device that starts the negotiation, is rejected by the device receiving the proposition - as in the example illustrated in Fig.1B - the latter device may give a hint to the requesting device as to how the proposition can be adapted so as to become acceptable. For example, the responding device may indicate that the proposed price is too high and hint at an acceptable price, or that the duration of the transfer is too long and suggest a new duration. It is then up to the device that started the negotiation to formulate a new proposition or to end the negotiation. Even if the requesting device modifies the proposition according to the hint given by the peer device, this does not guarantee that the peer device will accept the amended proposition, because the state of the responding device may have evolved.

Usually there will be a charge made for supplying power in a transaction according to the present invention. Accordingly, most methods according to the invention include one or more steps for ensuring that payment is made by the correct power-receiver device to the appropriate power-supplier device. Typically, the power-receiver device and the power-supplier device will both send a message to a billing server. This message includes details of the costs of the transaction and the parties to it, so as to enable the billing server to ensure that the correct payment is made by the (owner of the) power-receiver device to the (owner of the) power-supplier device, for example by deduction from an account associated with the power-receiver and crediting of an account associated with the power-supplier.

Fig.2 illustrates one example of billing steps that can be used in a method according to the present invention. As illustrated in Fig.2, when a negotiation is completed, the devices that are party to the energy-transfer transaction create a certificate which can be considered to record the contract between them. Both devices sign the certificate in order to validate it, then transfer it to the billing server. Perhaps the final cost of the transfer is not known at the time when the negotiation ends, but the devices may still create the certificate at this time - including details of their identities, the unit pricing and any other desired details of the transfer - and both sign it. In such a case, when the total cost becomes known (after the transfer is completed), then the devices will amend the certificate to show details of the total cost, and sign it a second time. After this second signing of the certificate it can be forwarded to the billing server in order to initiate an appropriate financial transfer or invoicing.

In order to ensure that billing is correctly and securely handled, the message forwarded to the billing server should preferably by validated by both the power-supplier device and the power-receiver device, for example, by creating a digital certificate that is digitally signed by both devices. The information included in the billing message can vary but it will include data sufficient to enable the billing server to identify the devices involved in a given transaction, as well as the cost of the transaction.

Although it is possible to build systems including a billing server that is dedicated to processing costs of power-transfer transactions according to the invention, in some applications it may be convenient to make use of a billing server which exists for some other purpose, e.g. for billing telephony charges, charges made on a credit card, etc.

The power-distribution methods according to the present invention can be automated to a greater or lesser extent according to the application. In some applications it is appropriate for the triggering of a negotiation to be automatic (based, for example, on monitoring of the current status of a device in terms of consumption/production/storage of electrical energy), for the negotiation to be carried out automatically based on predefined rules (e.g. with regard to acceptance, refusal or compromise of transfer details in the case of mismatch between the transfer details specified by the negotiating devices), for an agreed transfer to be performed automatically and for associated billing data to be despatched automatically. In other cases it may be necessary or desirable for the procedure to involve some human intervention - for example, to trigger a negotiation, to accept/refuse transfer details, to indicate an allowable compromise in the details of a transfer, to agree or set a price for a transfer (including indicating that a transfer is free of charge), etc.

### Power-Distribution Systems (and Power-Supplier Devices, Power-Receiver Devices, and Power-Transfer Links used Therein)

According to a first embodiment of the power-distribution system according to the invention, a special kind of link is used to interconnect devices which may wish to participate in an electrical-power transfer transaction, and the interconnected devices are adapted to be able to communicate power and information via the special link. In view of the fact that the special link is used for communicating power and information between the parties to the power-transfer transaction, it shall be referred to in the present document as a PI-link. In a similar way, the devices that are adapted to be able to communicate power and information via the PI-link shall be designated PI-devices, and a system including PI-devices interconnected by a PI-link shall be designated a PI-system.

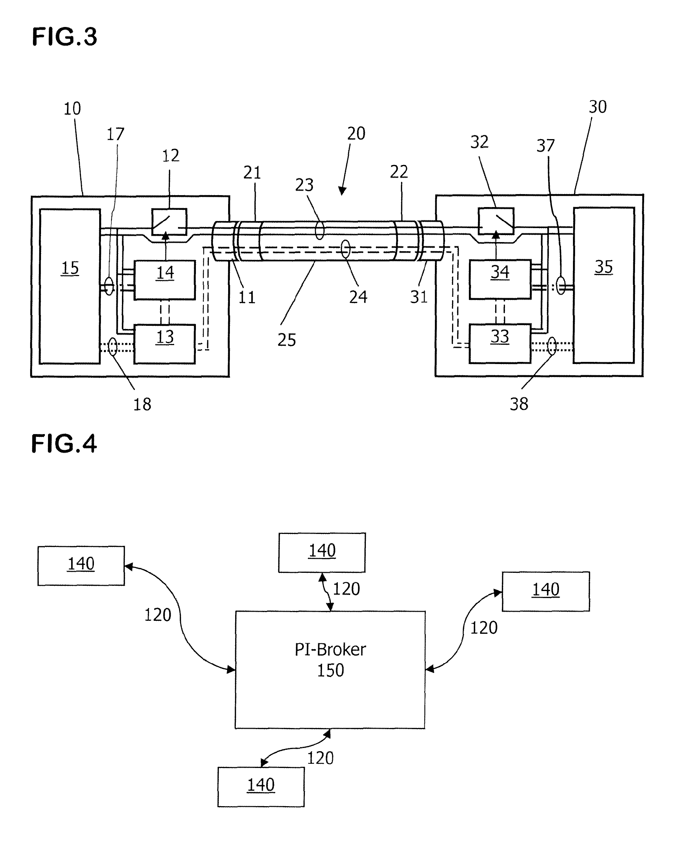

Fig.3 illustrates the general structure of one example of a PI-system according to the first embodiment of the invention. In Fig.3, wires carrying electrical power are drawn using solid lines whereas wires carrying information (messages/data) are drawn using dashed lines.

In the example illustrated in Fig.3, a first PI-device 10 has a socket 11 adapted to receive a plug 21 at one end of a PI-link 20. A plug 22 at the other end of the PI-link 20 is plugged into a socket 31 of a second PI-device 30. In this example, the PI-link 20 is a cable including a first pair of insulated wires 23, for carrying electrical power, and a second pair of insulated wires 24, for carrying information (data). The insulated wires 23,24 are surrounded by an insulating sheath 25. Each of the insulated wires 23,24 is connected to a corresponding pin (not shown) in plug 21 and in plug 22.

Each of the PI-devices 10, 30 includes a functional section 15, 35 associated with one or more primary functions which the device is designed to perform. The nature of this functional section will depend on the nature of the PI-device itself, as will be explained in greater detail below.

According to the first embodiment of the present invention, the PI-devices 10 and 30 differ from conventional devices (mobile telephones, MP3 players, wind turbines, uninterruptible power supplies, etc.) by virtue of the fact that they contain extra components involved in implementing the peer-to-peer negotiation and transfer of electrical power according to the invention. More particularly, each of the PI-devices 10, 30 includes:
- a respective galvanic isolation device 12, 32 (illustrated as a switch in Fig.2) enabling the PI-device to selectively connect to or disconnect from the power wires 23 of the PI-link 20;
- a respective communications module 13, 33 enabling the PI-device to communicate over the data wires 24 of the PI-link;
- a respective control module 14, 34 controlling the operation of the galvanic isolation device 12 and the communications module 13, as well as implementing automatic or semi-automatic procedures for peer-to-peer negotiation and accomplishment of power-transfer transactions according to the present invention;
- a unique identification code, typically stored in the control module; and
- wiring linking the above-mentioned components 12-14 and 32-34 to each other, and to the functional sections 15,35 of the PI-devices, as well as wiring and a socket for connecting to the PI-link 20.

The elements of the PI system of Fig.3 will now be considered in greater detail, starting with the PI-devices.

The PI-devices 10, 30 are substantially any devices that can be connected to a PI-link 20. When two PI-devices are connected over a PI-link 20 they establish a point-to-point data connection. There may be an initial handshake procedure, amongst other things in order to enabling each of the communicating devices to establish the identity of the remote PI-device with which it is about to negotiate. After the initial handshake, the PI-devices can use the communications link in order to negotiate a transfer of energy over the PI-link 20. The transferred energy can be used for immediate consumption, or can be stored (for example, in a battery (not shown) forming part of the PI-device or associated therewith) for future consumption. During the power-transfer operation, one of the PI-devices will act as a power-supplier and the other PI-device acts as a power-receiver.

As indicated above, the negotiating PI-devices may decide to use, in the energy transfer, a voltage level or waveform (e.g. direct current or alternating current) that is different from that conventionally used in mains power supply, notably a voltage which is better-suited to the needs of the PI-device which is receiving the power or a voltage which is the "natural" voltage generated within a particular PI-device that is supplying the power.

Each PI-device can consist of one or more of the following aspects:
- Consumer: a consumer is a device that has power needs. The consumed power has certain electrical characteristics (e.g. maximum current, desired voltage level, ac or dc, etc.) and the power consumption at any given moment may be considered to represent the current "state" of the consumer device.
- Producer: a producer is a generator of power. The power can come from any source (e.g. solar, chemical battery, wind power, etc.). The generated power has certain electrical characteristics (e.g. maximum power, efficiency, how "clean" the production is, cost, the range of electrical voltages and currents that can be supplied, etc.) and the power production at any given moment may be considered to represent the current "state" of the producer device.
- Storage: a storage component is any kind of device that can store energy (e.g. a battery, flywheel, etc.). The storage device has certain electrical characteristics (e.g. delivered voltage, carrying capacity, efficiency, etc.) and parameters such as the level of charge and time remaining until full charge may be considered to represent the current "state" of the storage device.

To see how different devices can embody combinations of the above-mentioned different aspects, consider the following: a typical electrical appliance is a "consumer" only. More sophisticated devices, such as laptop computers, are consumers but also have a storage capability (e.g. a lithium ion battery). A UPS (Uninterruptible Power Supply) can be both a consumer and a producer, and has internal storage. A transformer is a producer that has no internal storage. A photovoltaic module is a producer and often has some form of embedded storage.

A device having "consumer" and/or "storage" aspects can act as a power-receiver in a transaction according to the present invention. A device having "storage" and/or "producer" aspects can act as a power-supplier in a transaction according to the present invention.

As mentioned above, the PI-devices will generally have a functional section 15, 35 comprising hardware and/or software for performing one or more functions associated with application of the device. In devices that have a "producer" aspect, this functional section 15, 35 will generally include components required for management and implementation of power generation and in devices that have a "storage" function, this functional section 15, 35 will generally include components required for managing charging of the associated storage element(s). Considering some examples of devices having a "consumer" aspect:
- If the PI-device 10 is a mobile telephone then the functional section 15 will include hardware and software required for implementing telephony functions as well as any additional functions - web browsing, photography, etc. - that may have been specified by the manufacturer. The functional section 15 will also include the hardware/software required for performing ancillary functions (e.g. detecting and displaying available remaining battery power, etc.) that are normally provided in a mobile telephone.
- If the PI-device 10 is an MP3 player. Then the functional section 15 will include hardware and software required for inputting, storing and playing MP3 files, including functions related to obtaining and responding to user commands.

Whether the PI-devices having a "consumer" aspect, a "producer" aspect or a "storage" aspect, their functional sections 15, 35 will generally include components for managing power-supply issues (e.g. an interface for connection to a power input/output and/or a storage element, a component for monitoring the voltage of the supplied/generated/stored power, etc.). However, the functional section 15, 35 can also receive power from/supply power to the PI-link 20. Depending on the configuration of the PI-device in question, the control unit 14, 34 is adapted so as to interface in an appropriate manner with components in the functional section 15, 35 which manage power-supply issues, so that excess power can be output via the PI-link 20 and/or required power can be input via the PI-link 20. The control unit 14, 34 also controls operation of the galvanic isolation device 12, 32 so that power flows to/from the functional section 15, 35 of the PI-device via the PI-link 20 only at times agreed in the negotiations between the PI-devices currently connected to the PI-link.

As mentioned above, the control unit 14, 34 of a PI-device 10, 30 is adapted to manage the negotiation and implementation of a power-transfer transaction according to the invention. The precise components necessary to accomplish this may vary from one application to another and one device-type to another. However, in many cases the control unit 14, 34 will include a processing unit adapted to run a number of sub-routines specified in an associated memory. Those sub-routines specify rules for the control of the galvanic isolation device 12, 32, rules for the compilation of messages to be output by the communications module 13, 33 and for the interpretation of messages received thereby, and rules for interfacing appropriately with the functional section 15, 35. When compiling messages during a negotiation, the control unit 14, 34 will often refer to a memory which stores details of the electrical characteristics of the power required by/generated by this PI-device and/or to live status data obtained from the functional section 15, 35 as described below. The stored electrical-characteristic data will generally be pre-programmed by the device manufacturer.

The control unit 14, 34 may be arranged not only to manage negotiations and power transfers via the communications link but also to communicate with the functional section 15, 35 via a data link 17, 37 (notably, in order to ascertain values of parameters indicating the current state of the PI-device in terms of energy consumption/production/storage, for example, battery charge, current power usage, etc.). Information obtained from the functional section 15, 35 via data link 17, 37 may be communicated over the PI-link 20 via the communications module 13, 33.

The communications module 13, 33 may, optionally, have a data link 18, 38 with the functional section 15, 35 in order to offer additional communication facilities between the functional section of PI-devices. The communications between the functional units 15, 35 are independent from the communications that pass between the control units 14, 34 in order to negotiate and implement a power transfer. These additional communications facilities allow PI-devices to exchange data for other purposes, for example, to connect to a larger data network (LAN, WAN, internet, etc.).

When these additional communications facilities are provided, the wires 24 of the PI-link 20 are used to transmit information for the functional section 15, 35 and information for the control section 14, 34 of the PI-devices. Accordingly, in this case the communications module 13, 33 is adapted to differentiate between incoming data intended for the control unit 14, 34 and incoming data intended for the functional unit 15, 35, and to route the incoming signals appropriately. This differentiation can be achieved in well-known ways, for example, by including address information in the message, by using different formats for messages between functional units and for messages between control units, etc.

The PI-link 20 used in the power-distribution system according to the first embodiment of the invention can be implemented in devices of different forms and having different levels of complexity. A basic PI-link 20, as illustrated in Fig.3, is a multi-wire cable that can carry both power and information in separate pairs of wires. However, both data and power could be carried on a single pair of wires, for example by superimposing a high-frequency data signal over a low-frequency alternative current or direct current power signal.

Indeed, the communications channel could be de-coupled from the power-link entirely, for example by using completely separate cables for power transfer and data communication, by using a wireless transmission method for the communications channel, etc. In such cases components can be provided so as to ensure that the operation of the communications channel is properly synchronized with the power-transfer link (notably, in terms of ensuring that communication takes place with a remote device to which the power-link is connected).

Moreover, functionality additional to that mentioned above may be provided in the PI-link, including one or more of the following:
- an integrated display that shows the status of negotiation between the devices interconnected by the PI-link and/or the amount of energy transferred so far,
- buttons allowing a user to validate or cancel a transfer;
- an electrical converter to change the voltage level between the two ends of the cable.

Now, the electrical configuration (voltage/maximum current/frequency) supported by a given wire depends on the properties of that wire (e.g. diameter, material, etc.). In preferred embodiments of the invention, the power link is capable (by virtue of its diameter, conductivity, shielding, etc.) of supporting transfers of electrical energy having different characteristics. However, it is not essential for a single PI-link to be able to support all the different electrical characteristics of present day electrical and electronic consumer, producer and storage devices. Some PI-links may be optimized for portability, usability and to connect small mobile devices. Such PI-links would typically handle dc energy transfers only. Other PI-links may be designed to handle 230V/50Hz voltage levels and carry the current over longer distances. The skilled man will readily understand how to tailor the properties of the wires used in a PI-link to the electrical characteristics, or range of electrical characteristics, of the PI-devices in his intended application.

The capabilities of a PI-link to communicate information are by no means limited to the negotiation of the power transfer. The PI-link may be used for communicating other types of data, including data relating to the current status of one or more devices to which it is connected. As a further example, it can be used to integrate the device into a bigger information network and/or to give it access to the internet.

This PI-link differs from known cables that carry both power and information - such as USB cables, so-called "firewire" cables (according to IEE standard 1394), and pawer-over-Ethernet proposals - because, unlike the PI-link of the invention, those known cables make use of continuous, unidirectional flow of electrical energy, with a fixed voltage level and low maximum power capacities. Moreover, known systems using USB cables, firewire connections and power-over-Ethernet do not involve the negotiation of pricing, time/duration of power supply or the electrical specifications of energy transferred in an energy-transfer transaction.

According to a second embodiment of the power-distribution system according to the invention to the invention, the negotiation between PI-devices is made via the intermediary of a broker device as shown in the example illustrated in Fig.4. Typically, the PI-broker device 150 has connections to a plurality of PI-devices 140 which are potential power-supplier devices and/or potential power-receiver devices. These connections may be ad hoc connections made by plugging a plurality of PI-links 120 into the PI-broker device 150, such that messages and power from the PI-devices 140 pass through the PI-broker device 150. However, other arrangements can be used. For example, arrangements can be used in which the PI-broker device 150 acts as an intermediary only for the negotiation of a power-transfer transaction, the power-transfer being made directly between the parties to the transaction. In a system of that type the PI-broker device 150 need not even have any mechanical connection to the PI-devices (for example, if wireless communications methods are used), and the PI-broker serves as a trusted party helping to assure security of the power transfer.

The PI-broker device 150 is adapted to put multiple potential power-suppliers and power-receivers in relation with each other in accordance with their individual requests. More particularly, if the PI-broker device 150 receives a message indicating that a first PI-device needs energy, the PI-broker device 150 may contact all the other PI-devices to which it is connected by communication links, or all the connected PI-devices which are capable of acting as power-suppliers, to inform them of this request (either by forwarding a copy of the original message or by emitting a message of its own). The PI-broker device 150 may be programmed or arranged so as to contact certain potential power-suppliers preferentially, or to contact them in a particular order (i.e. to contact a second potential power-supplier device only after negotiation between the potential power-receiver and a previously-contacted potential power-supplier have failed to result in agreement).

In a similar way, if the PI-broker device 150 receives a message indicating that a first PI-device can provide electrical energy, the PI-broker device 150 may contact all the other PI-devices to which it is connected by communication links, or all the connected PI-devices which are capable of acting as power-receivers, to inform them of this offer (either by forwarding a copy of the original message or by emitting a message of its own). Once again, the PI-broker may be programmed or arranged to contact certain potential power-receivers preferentially or in a specific order.

Depending on the application and the configuration of the system, the PI-broker device 150 can be designed to take a more or less active role in the negotiation process. A simple PI-broker device 150 may merely act as a conduit for messages between the PI-devices 140 connected to it. A more sophisticated device will keep track of the energy-requests and energy-offers it receives and may include functionality allowing it to find an optimum match for potential power-suppliers and power-receivers (e.g. a match which results in most efficient overall use of energy).

In preferred implementations of power-distribution system according to the second embodiment, the PI-broker 150 serves not only to facilitate negotiations between various PI-devices 140 but also to route the energy transfer between them. Typically, if the PI-broker 150 has N sockets it will incorporate an Nx(N-1) switching board (not shown) for routing the electrical energy during a power transfer according to the invention. It is possible to reduce the size of the switching board, for example by limiting the number of power transfers that can take place at the same time. In such a case, the PI-broker 150 is adapted to perform internal processing in order to correctly schedule use of the available routes.

Moreover, the PI-broker may be configured (by programming or provision of hardware components) so as to provide desired ancillary functions: for example, collecting historical data relating to the energy production by each of the producer devices connected thereto, collecting historical data relating to the energy consumption of each of the consumer devices connected thereto, prediction of demand from different consumer devices, and others.

### Some Example Applications

A brief description will now be given of some examples of different applications of the present invention. These examples are by no means exhaustive but, instead, seek to give some idea of the practical utility and versatility of the invention. The examples will refer to three fictitious people - designated Louise, John and William - who have electrical devices with varying needs and capacities in terms of electrical energy consumption and/or supply. These examples assume that electrical energy transfers are negotiated and implemented using PI-links interconnecting pairs of devices as in the above-described first embodiment of power-distribution system according to the invention.

### Example 1 - energy transfer between two mobile appliances

Louise, John and William are in a restaurant when John's mobile telephone beeps to indicate that its battery is running low on power. John could use a PI-link according to the present invention to obtain power from Louise's mobile telephone but Louise is reluctant to agree to this because her own telephone is not fully-charged. William has a mobile music player that he does not intend to use any more that day and there is some electrical energy left in its battery. William agrees to transfer the electrical energy from his mobile music player to John's mobile telephone at no charge. William and John plug their devices into a PI-link and, after a time, John's phone has enough energy in store to remain active that evening.

### Example 2 - a single energy transfer between a vehicle and a mobile appliance

Louise travels home from the restaurant in a taxi which constitutes a PI-device having a storage aspect (e.g. using the car battery or other storage cells) and/or having a producer aspect (e.g. using solar panels provide on the taxi roof). The tariff for obtaining electrical energy from the taxi (acting as a supplier device) is indicated on a poster in the taxi - the price is quite high. Remembering that her mobile telephone needs charging, and knowing that the amount of energy required is relatively small, Louise decides to charge the battery in her mobile telephone and uses a PI-link to connect her telephone to a PI-socket in the taxi.

The PI-link may incorporate a display showing Louise the cost of energy received so far in this transaction (and may include a button enabling her to terminate the transaction when she sees the price reach a particular value).

In this case, the billing server for the energy transfer may be integrated into the meter which calculates the charge for travelling in the taxi so that, at the end of the trip, the cost of the energy transfer is added to the normal taxi bill.

### Example 3 - multiple transfers within a vehicle

William takes a trip on an aeroplane, taking his laptop computer with him. The computer battery is fully charged. Knowing that the airline has a PI-system and charges customers high prices for energy, William decides to sell the energy in his laptop's battery to other passengers on the plane, with the negotiation and power-transfer taking place over the aeroplane's PI-system. There is a user-interface either on the PI-link connecting William's laptop computer to a PI-socket in the aeroplane or on William's laptop. William uses this interface in order to control the PI-link/laptop to sell all the electrical energy in his laptop's battery, without requiring further intervention on his part to validate individual transactions. A general offer of energy is made to other passengers in the aeroplane, via the PI-system, negotiations are held with responding devices and agreed transfers are made.

In this case, William's laptop and the responding devices use telephone numbers as identification codes. The money earned from the energy transfers made from William's laptop is credited to his telephone account, leading to a reduction in his next bill.

### Example 4 - energy transfer between different devices in a building (some mobile, some fixed)

John's home is equipped with a PI-system including a PI-broker connected to a number of PI-devices. The PI-broker manages power production and power consumption in the PI-system and, when possible, uses energy produced in the PI-system to meet the energy needs of devices connected in the system. The PI-broker may also be the mains power supply so as to be able to meet any shortfall in local energy-production.

The PI-system was first set up when John installed in his home ten windows with integrated solar cells. Each of the windows was connected to the PI-broker (and the PI-broker was arranged so as to be able to provide John with data regarding the energy produced by each window pane). In the early days, John used this basic PI-system to re-charge his mobile telephone and laptop computer. However, he installed a small flywheel and connected it to the PI-broker. If the windowpanes are producing energy and no other devices connected to the PI-broker require it, the PI-broker can store the excess energy in the flywheel. When night falls, and the windowpanes cease producing energy, the flywheel will be able to supply energy to appliances that require it and which are connected to the PI-broker.

John can extend his PI-system, for example, by installing low-voltage lighting in his home and connecting the lighting circuit to the PI-broker. If the lighting system draws more power than can be produced locally, John could buy a micro fuel cell and connect it to the PI-broker.

It can be seen that the system can cope easily with the introduction of new power sources. The PI-broker can be provided with a memory, programmed to store data relating to the energy production/consumption of the various devices attached to it, and programmed to apply prediction algorithms to the stored data in order to be able to predict times when there will be demand for electrical energy within the system and/or electrical energy produced within the system. The PI-broker can be further programmed to control the operation of the various devices connected to it, in order to schedule energy transfers so as to best match supply to demand within the system. Any surplus energy there is, for example, when John is away from home, can be sold to a neighbour or to the utility company, notably if the neighbour has a PI-system of his own and communication/power-transfer links exist between John's PI-system and the neighbour's PI-system.

### Example 5 - multiple communications on one PI-link

After his flight, William arrives at a hotel. He uses a PI-link to connect his laptop to a PI-socket in his hotel room. The PI-link is configured so that not only can the laptop re-charge using energy transferred via the PI-link but also it can check emails by connecting to the Internet via the communications link in the PI-link.

### Example 6 - energy transfer between a mobile generation device and a mobile appliance

Louise goes hiking and takes with her a special backpack which has solar cells on the outside connected to a PI-socket located inside the backpack. Louise uses a PI-link to connect her digital camera to the PI-socket in her backpack. As Louise walks along, the solar panels can charge the battery in the digital camera. When the camera is fully-charged, Louise can use the PI-link to plug her mobile telephone into the PI-socket so as to charge its battery (assuming that the solar cells are producing sufficient energy).

The skilled person will readily think of other examples of applications of the methods, systems and devices according to the present invention.

Although the present invention has been described above with reference to particular embodiments, the skilled person will readily understand that the present invention is not limited by the details of the above-described embodiments. More particularly, the skilled person will understand that various modifications and developments can be made in the above-described embodiments and that different embodiments can be designed without departing from the repent invention as defined in the appended claims.

For example, although the power-distribution systems described above implement power transfers between pairs of PI-devices that are directly interconnected, or are interconnected via a broker device - and it is advantageous for the transfer to be as direct as possible for reasons of security and efficiency - the power transfer could also be made using other interconnections, for example, at least partly using existing wiring in a house.

The skilled person will readily appreciate that minor implementation details of the embodiments can be varied in conventional ways. For example, embodiments in which one device bears a plug and a partner device or link bears a socket can be modified so that the one device bears a socket and the partner device bears a plug. More specifically, although the above description describes PI-devices and PI-broker devices as having sockets for connection to plugs on the end of PI-links, it would be possible to build systems in which the PI-link bears sockets and the PI-devices and brokers bear plugs.

Although the above description discusses PI-devices which are already adapted for connection to PI-link devices, the present invention extends to the case where an interface is provided, for connection to a power-supply inlet of a conventional device, enabling the conventional device to be connected to a PI-link. In such a case, the interface incorporates a galvanic isolation device, control unit and communications module comparable to those illustrated in Fig.3.

## Claims

1. A method of distributing electrical power comprises the steps of:
issuing a power-transfer-negotiation message by a first device (10/30);
responding to the power-transfer-negotiation message by a second device (30/10);
determining whether a power-transfer can be implemented satisfying the power-transfer transaction details specified by the first and second devices (10,30); and
if a power-transfer can be implemented satisfying the power-transfer transaction details specified by the first and second devices, implementing said transfer of electrical power from one of said first and second devices (10,30) to the other according to said transaction details.

2. A method of distributing electrical power according to claim 1, wherein the issuing and responding steps are performed using a communications link (24) and the power-transfer transaction is performed using a power-transfer link (23), said communications link and power-transfer link being integrated into a common cable (20).

3. A method of distributing electrical power according to claim 1 or 2, and comprising the steps of generating a billing message comprising data indicative of the charge associated with the power-transfer transaction, validating said billing message by the first and second devices (10,30), and transmitting said billing message to a billing server.

4. An electrical-power distribution system comprising:
a communications link (24);
a power-transfer link (23);
at least two devices (10,30), each of said devices comprising communications means (13,14/33,34) adapted, in use, to issue power-transfer-negotiation messages and to issue responses to received power-transfer-negotiation messages via said communications link (24);
means (14/34) adapted, in use, to determine whether a power transfer can be implemented satisfying the power-transfer transaction details specified by a first and second of said at least two devices (10,30); and
means (14/34) adapted, in use, to implement a transfer of electrical power from one of said first and second devices (10,30) to the other, via said power-transfer link (23), according to said transaction details if the determining means (14/34) determines that a power-transfer can be implemented satisfying the power-transfer transaction details specified by the first and second devices (10,30).

5. An electrical-power distribution system according to claim 4, wherein said communications link (24) and said power-transfer link (23) are integrated in a common cable (20).

6. An electrical-power distribution system according to claim 4, and comprising a broker device (150) connected to each of said at least two devices (140), wherein the broker device (150) is arranged to receive power-transfer negotiation messages and responses issued by said devices (140).

7. An electrical-power provider device (10/30) comprising:
communications means (13,14/33,34) adapted in use, when said device has energy available for transfer, to issue a power-transfer negotiation message offering to supply electrical energy to an electrical-power receiver device (30/10), and to issue a response to a power-transfer-negotiation message, issued by said electrical-power receiving device (30/10), requesting supply of electrical energy;
specifying means (14,34) adapted to specify details of an electrical-power supply transaction that the electrical-power provider device (10/30) can implement;
means (14/34) for determining whether said power-receiver device (30/10) accepts the electrical-power supply transaction details specified by said specification means(14/34); and
power-supply means (12,14/32,34) adapted to output electrical power to said electrical power-receiving device (30/10), in accordance with the electrical-power supply transaction details specified by said specification means (14/34) if the determining means (14/34) determines that the power-receiver device (30/10) accepts said specified details.

8. An electrical-power receiver device (10/30) comprising:
communications means (13,14/33,34) adapted in use, when said device (10/30) has requires electrical energy, to issue a power-transfer negotiation message requesting the supply of electrical energy from an electrical-power provider device (30/10), and to issue a response to a power-transfer-negotiation message, issued by said electrical-power provider device (30/10), offering to supply electrical energy;
specifying means (14/34) adapted to specify details of an electrical-power supply transaction that the electrical-power receiver device (10/30) accepts to implement;
means (14/34) for determining whether said power-provider device (30/10) can provide electrical energy according to the electrical-pawer supply transaction details specified by said specification means (14/34); and
power-input means (12,14/32,34) adapted to receive electrical power from said electrical power-provider device (30/10), in accordance with the electrical-power supply transaction details specified by said specification means (14/34), if the determining means determines that the power-provider device (30/10) can provide electrical energy according to said specified details.

9. An electrical-power broker device (150) comprising:
connecting means (120) adapted, in use, to connect said electrical-power broker device to a plurality of devices (140) including at least one electrical-power provider device and at least one electrical-power receiver device;
communications means adapted, in use, to receive power-transfer-negotiation messages and responses to power-transfer negotiation messages issued by devices (140) connected to said connecting means (120); and
first routing means for routing a response to a power-transfer negotiation message to the device (140) which issued the initial power-transfer negotiation message; and
second routing means adapted in use to route electrical power from an electrical-power provider to an electrical-pawer receiver after a power-transfer negotiation message and response have been exchanged by said devices (140) via said first routing means.

10. An electrical power transfer cable (20) comprising a communications link (24) and a power-transfer link (24), wherein the power-transfer link (23) is adapted, in use, to transfer power discontinuously and in either direction, dependent on signals communicated on the communications link (24).
